# EUROPÄISCHE PATENTSCHRIFT

(11) **EP 0 501 132 B1**
(45) Veröffentlichungstag und Bekanntmachung des Hinweises auf die Patenterteilung: **02.08.1995**
(21) Anmeldenummer: 92100861.1
(22) Anmeldetag: 20.01.1992
(51) Int. Cl.: B60G 15/06

(54) **Federbein für ein Kraftfahrzeug**
Suspension strut for an automatic vehicle
Jambe de suspension pour un véhicule automobile

(30) Priorität: 27.02.1991 DE 4106093
(43) Veröffentlichungstag der Anmeldung: 02.09.1992
(73) Patentinhaber: Dr.Ing.h.c. F. Porsche Aktiengesellschaft, 70435 Stuttgart (DE)
(72) Erfinder: Germano, Francesco, W-7123 Sachsenheim 1 (DE)

(56) Entgegenhaltungen:
- EP-A- 0 046 508
- EP-A- 0 126 006
- DE-A- 3 014 869
- FR-A- 2 548 972
- US-A- 4 260 177
- PATENT ABSTRACTS OF JAPAN vol. 8, no. 12 (M-269)(1449) 19. Januar 1984,& JP-A-58 174 006 (NISSAN JIDOSHA) 13. Oktober 1983
- PATENT ABSTRACTS OF JAPAN vol. 12, no. 171 (M-700)(3018) 21. Mai 1988,& JP-A-62 286 816 (NISSAN MOTOR) 12. Dezember 1987

## Beschreibung

Die Erfindung bezieht sich auf ein Federbein für ein Kraftfahrzeug nach dem Oberbegriff des Anspruchs 1.

Bei Abstützungen von Federbeinen für Kraftfahrzeuge am Fahrzeugaufbau, wie z.B. die DE-A 30 14 869 zeigt, ist es aufgrund der innigen Verbindung von Federteller und Abstützlager nur sehr schwer möglich, eine Anpassung des elastischen Stützlagers bzw. des Federtellers an andere Radbelastungen in einfacher Weise vorzunehmen. Bei einer derartigen Ausführung ist dann zur Anpassung nur das gesamte Stützlager mit Federteller auszuwechseln, was sehr aufwendig ist.

Aus der EP-A 0 126 006 ist eine Ferbein-Abstützung bekannt, die eine getrennte Abstützung für eine Schraubenfeder und einen Stoßdämpfer aufweist. Die Schraubenfeder ist an einem aufbauseitig gehaltenen Federteller und dem Stoßdämpfer in einem elastischen Lagerelement abgestützt. Der Federteller und das Lagerelement sind über Schrauben am Aufbau gemeinsam befestigt und austauschbar. In den Federteller ist ein Anschlagelement integriert, das elastische Ausfeder- und Einfederanschläge aufweist, die zwischen mit einer Kolbenstange eines Stoßdämpfers verbundenen Stützen angeordnet sind, wobei die eine Scheibe mit dem elastsichen Lagerelement verbunden ist.

Aufgabe der Erfindung ist es, ein Federbein für ein Kraftfahrzeug zu schaffen, dessen obere aufbauseitige Abstützung zum Teil oder als ganzes den Fahrzeugbelastungen in einfacher Weise anpassbar ist. Des weiteren soll ein Auswechseln von Teilen der Abstützung zu Reparaturzwecken problemlos durchzuführen sein.

Diese Aufgabe wird erfindungsgemäß durch die kennzeichnenden Merkmale des Anspruchs 1 gelöst. Weitere vorteilhatte Merkmale beinhalten die Unteransprüche.

Die mit der Erfindung hauptsächlich erzielten Vorteile bestehen darin, daß sowohl das mit der Kolbenstange verbundene elastische Lagerelement als auch der Federteller mit dem Anschlagelement als Einheit auswechselbar ist. So kann das elastische Lagerelement z.B. eine Hydraulikeinheit oder aber ein elastisches Lagerelement sein. Dies kann wiederum verschiedene Elastizitäten aufweisen und ist somit an die geforderten Belastungen anpassbar.

Das Anschlagelement des Federtellers ist mit dem Lagerelement über Schrauben am Dom festgesetzt, so daß entweder das Anschlagelement und das Lagerelement gemeinsam oder aber nur das Anschlagelement oder das Lagerelement austauschbar ist.

Auch ist mit dem Federteller ein weiterer Federteller verbindbar, der die Möglichkeit schafft, Schraubenfedern unterschiedlichen Durchmessers vorzusehen. Dieser federteller umfasst ein hülsenförmiges Element, das eine Form entsprechend dem federteller der Baueinheit aufweist und zur Aufnahme der Schraubenfeder z.B. größeren Durchmessers ein winkelförmiges Ringelement besitzt.

Die Verbindung des Lagerelements mit der Kolbenstange erfolgt über ein Hülsenelement, das einerseits mit dem Lagerelement fest verbunden ist und das andererseits auf die Kolbenstange aufgeschraubt wird. Mit der Hülse sind Scheiben verbunden, die mit festen Anschlägen des federtellers bei Ein- und Ausfederungsbewegungen zusammenwirken.

Am Federteller sind zur Vereinfachung der Montage die Befestigungsschrauben eingepresst gehalten, so daß nach dem Lösen der Muttern ein einfaches Austauschen möglich wird.

Ausführungsbeispiele der Erfindung sind in der Zeichnung dargestellt und werden im folgenden näher beschrieben.
Es zeigen
- Fig. 1: eine Ausführung eines Federbeines mit einem Anschläge aufweisenden Federteller und einer Hydraulikeinheit,

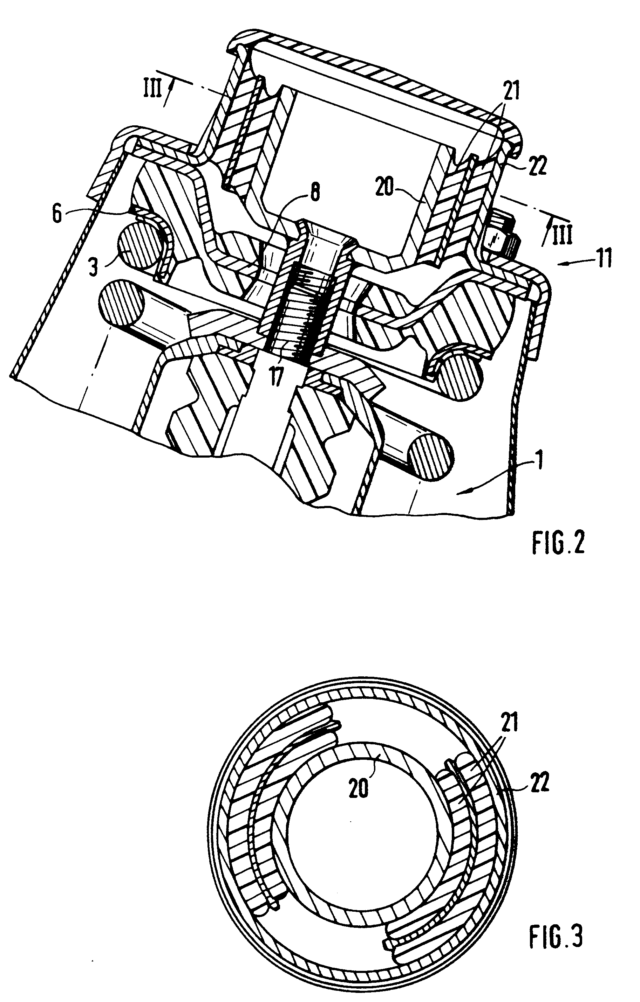

- Fig. 2: eine weitere Ausführung eines Federbeines mit einem Anschläge aufweisenden Federteller sowie einem elastischen Lagerelement,
- Fig. 3: einen Schnitt nach der Linie III-III der Fig. 2,

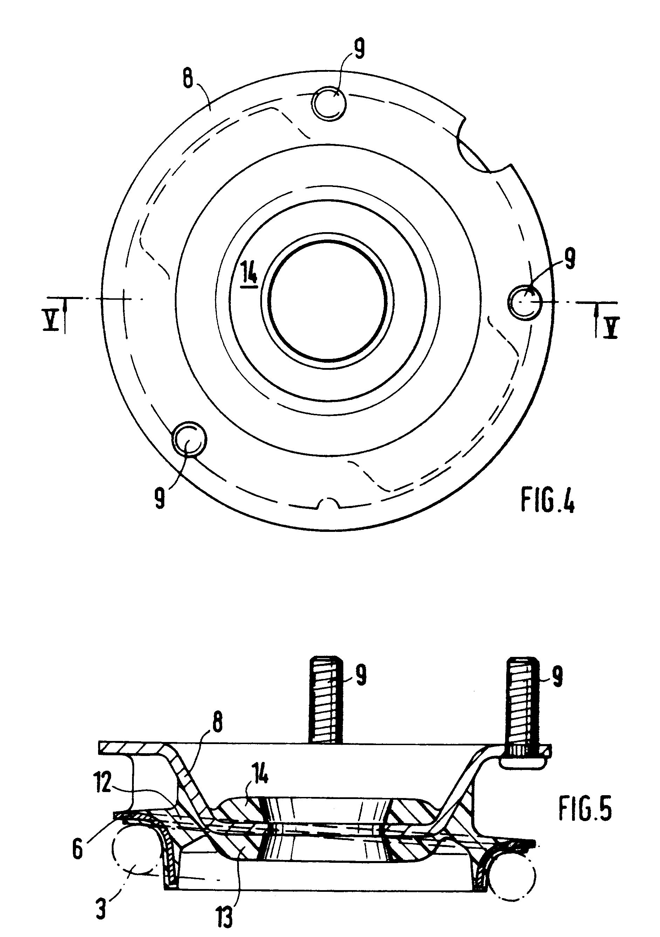

- Fig. 4: eine Draufsicht auf einen Federteller mit Anschlägen,
- Fig. 5: einen Schnitt nach der Linie V-V der Fig. 4, und

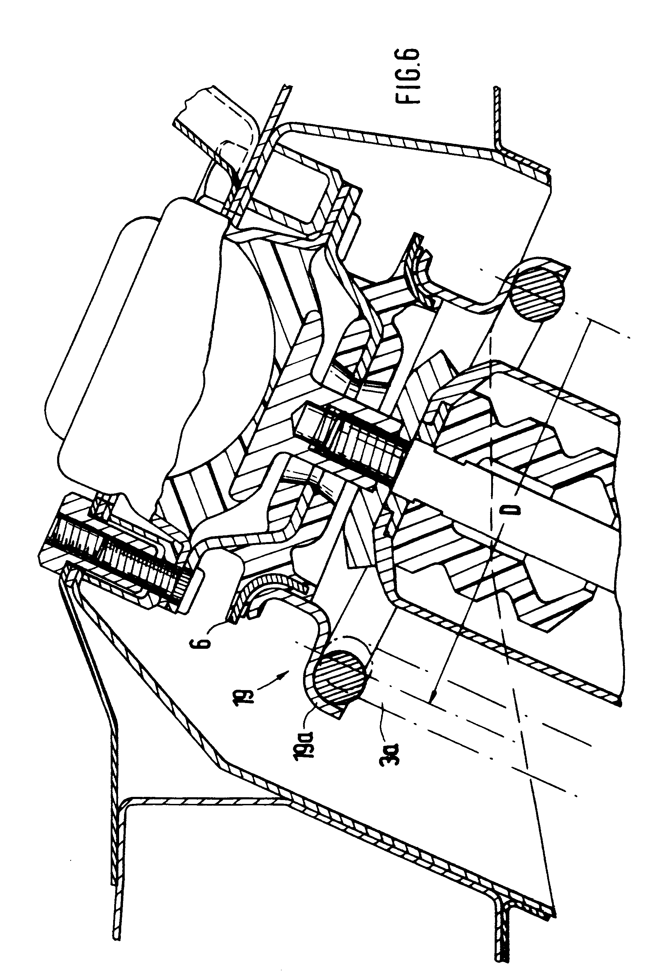

- Fig. 6: eine Ausführung eines Federbeines mit einem Federteller für eine Schraubenfeder größeren Durchmessers.

Ein Federbein 1 umfaßt einen Stoßdämpfer 2, bestehend aus einer Kolben-Zylinder-Einheit und einer Schraubenfeder 3; 3a. Das Federbein 1 ist mit seinem unteren Ende am Radträger oder mit einem Radführungsglied verbunden und sein oberes Ende ist am fahrzeugaufbau 4 in einem elastischen Lagerelement 5; 11 abgestützt.

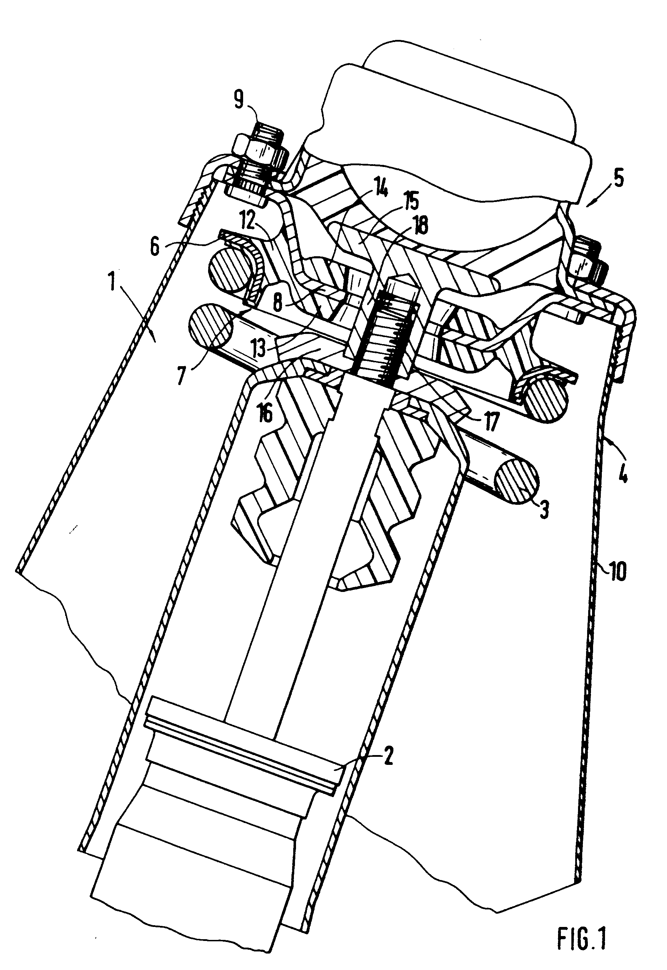

Wie in Fig. 1 näher gezeigt, sind der Stoßdämpfer 2 und die Schraubenfeder 3 getrennt am Fahrzeugaufbau 4 gehalten. Der Stoßdämpfer ist im elastischen Lagerelement 5; 11 und die Schraubenfeder 3 am Federteller 6 gelagert.

Der Federteller 6 ist als eine Baueinheit 7 mit einem Anschlagelement 8 ausgeführt und über Schrauben 9 an einem Dom 10 des Fahrzeugaufbaus 4 gehalten. Ebenfalls ist das elastische Lagerelement 5; 11 über diese Schrauben 9 am Fahrzeugaufbau 4 abgestützt.

Der Federteller 6 ist unter Zwischenschaltung eines elastischen Entkopplungsgliedes 12 mit dem Anschlagelement 8 einstückig verbunden, wobei oberhalb und unterhalb des Elements 8 elastische Anschläge 13 und 14 in Ein- und Ausfederungsrichtung angeordnet sind. Diese festen Anschläge 13 und 14 sind korrespondierend mit beweglichen Anschlagflächen an Scheiben 15 und 16, die mit der Kolbenstange 17 des Dämpfers 2 verbunden sind, vorgesehen.

Die eine Scheibe 15 ist Teil des elastischen Lagerelements 5; 11 und mit einer Hülse 18 verbunden, die auf der Kolbenstange 17 befestigt ist. Die weitere Scheibe 16 ist im Abstand zur Scheibe 15 angeordnet und stützt sich an der Kolbenstange 17 ab. Zwischen diesen beiden Scheiben 15 und 16 ist der Ein- und Ausfederungsweg des Stoßdämpfers 2 begrenzt.

Mit dem Federteller 6 kann ein weiterer Federteller 6a verbunden werden, der eine Schraubenfeder 3a größeren Durchmessers D als der Federteller 6 aufnimmt. Der Federteller 6a umfaßt ein hülsenförmiges Element mit einem dem Federteller 6 angepassten Formverlauf und eine winkelförmige Ringaufnahme 19a für die Schraubenfeder 3a.

Das elastische Lagerelement 5 besteht aus einer Hydraulikeinheit und das Lagerelement 11 besteht aus einem Lagerelement mit einer elastischen Kennung, die je nach der Wirkung unterschiedlich sein kann.

Dieses Lagerelement 11 weist einen mit der Kolbenstange 17 verbundenen Topf 20 auf, der unter Zwischenschaltung eines elastischen Elements 21 mit einer hülsenförmigen Aufnahme 22 verbunden ist, die sich am Dom 10 des Fahrzeugs 4 abstützt.

Wie aus der Fig. 5 näher zu erkennen ist, bildet der Federteller 6 mit dem Anschlagelement 8 eine austauschbare Baueinheit 7. Ebenfalls ist das elastische Lagerelement 5; 11 austauschbar vorgesehen. Hierdurch besteht die einfache Möglichkeit, entweder beide Einheiten 7 und 5; 11 oder auch nur eine Einheit auszuwechseln. Dies ergibt eine optimale Anpassung an die Belastungen eines Fahrzeugs, so daß verschiedene Charakteristiken der Radaufhängung möglich werden.

## Patentansprüche

1. Federbein (1) für ein Kraftfahrzeug mit einer getrennten Abstützung am Fahrzeugaufbau für eine Schraubenfeder (3) und einen Stoßdämpfer (2), wobei die Schraubenfeder (3) an einem aufbauseitig gehaltenen Federteller (6) und der Stoßdämpfer (2) in einem eine Elastizität aufweisenden aufbauseitigen Lagerelement (5, 11) abgestützt ist, wobei der Federteller (6) mit einem Anschlagelement (8) über ein elastisches Entkopplungsglied (12) verbunden ist, wobei Federteller (6), Anschlagelement (7) und elastisches Entkoppelungsglied eine Baueinheit (7) bilden, die mit dem Lagerelement (5; 11) austauschbar an einem Dom (10) des Fahrzeugaufbaus (4) über Schrauben (9) befestigbar ist, wobei oberhalb und unterhalb des Anschlagelements (8) elastische Ausfeder- und Einfederanschläge (13, 14) angeordnet sind, die mit Abstand zwischen zwei mit einer Kolbenstange (17) des Stoßdämpfers (2) verbundenen Scheiben (15 und 16) angeordnet sind, und wobei die eine obere Scheibe (15) mit dem Lagerelement (5; 11) verbunden ist, **dadurch gekennzeichnet**, daß das Anschlagelement (8) am Fahrzeugaufbau (10, 4) befestigt ist, wobei der Federteller (6) unter Zwischenschaltung des elastischen Entkopplungsgliedes (12) mit dem Anschlagelement (8) einstückig verbunden ist.

2. Federbein nach Anspruch 1, **dadurch gekennzeichnet,** daß der Federteller (6) zur abstützenden Aufnahme eines weiteren Federtellers (6a) für eine Schraubenfeder (3a) größeren Durchmessers (D) ausgebildet ist und aus einem hülsenförmigen Element besteht, das einerseits der Form des ersten Federtellers (6) angepaßt ist und andererseits eine winkelförmige Ringaufnahme (19a) für die Schraubenfeder (3a) aufweist.

3. Federbein nach den Ansprüchen 1 oder 2, **dadurch gekennzeichnet**, daß das elastische Lagerelement (5) aus einer Hydraulikeinheit besteht, die über die Befestigungsschrauben (9) mit der Baueinheit (7) am Dom (10) des Fahrzeugsaufbaus (4) verbindbar ist.

4. Federbein nach den Ansprüchen 1 bis 3, **dadurch gekennzeichnet**, daß das elastische Lagerelement (11) aus einem eine radiale Elastizität aufweisenden Einsatzelement (21) gebildet ist.

5. Federbein nach Anspruch 4, **dadurch gekennzeichnet**, daß das elastische Lagerelement (11) einen mit der Kolbenstange (17) verbundenen Topf (20) umfaßt, der unter Zwischenschaltung von den elastischen Einsatzelementen (21) in einer am Dom (10) des Aufbaus (4) gehaltenen hülsenförmigen Aufnahme (22) abgestützt ist und den Dom (10) übergreift.

## Claims

1. A telescopic leg (1) for a motor vehicle with a separate support on the vehicle body for a helical spring (3) and a shock-absorber (2), wherein the helical spring (3) is supported on a spring plate (6) held on the body and the shock-absorber (2) is supported in a bearing member (5, 11) with resilient characteristics on the body, wherein the spring plate (6) is connected to a stop member (8) by way of a resilient disengaging member (12), wherein the spring plate (6), the stop member (8) and the resilient disengaging member (12) form a structural unit (7) which with the bearing member (5; 11) is securable interchangeably to a dome (10) on the vehicle body (4) by way of bolts (9), wherein compressible resilient stops (13, 14) are arranged above and below the stop member (8) and are arranged at a distance between two plates (15 and 16) connected to a piston rod (17) of the shock-absorber (2), and wherein one upper plate (15) is connected to the bearing member (5; 11), **characterized in that** the stop member (8) is secured to the vehicle body (10, 4), wherein the spring plate (6) is integrally connected to the stop member (8) with the interposition of the resilient disengaging member (12).

2. A telescopic leg according to Claim 1, **characterized in that** the spring plate (6) is designed to support and receive a further spring plate (6a) for a helical spring (3a) of larger diameter (**D**) and comprises a sleeve-shaped member on the one hand adapted to the shape of the first spring plate (6) and on the other hand having an angular, annular receiving means (19a) for the helical spring (3a).

3. A telescopic leg according to Claim 1 or 2, **characterized in that** the resilient bearing member (5) comprises an hydraulic unit connectable to the structural unit (7) on the dome (10) of the vehicle body (4) by way of the fastening bolts (9).

4. A telescopic leg according to Claims 1 to 3, **characterized in that** the resilient bearing member (11) is formed by an insert member (21) having radial resilience.

5. A telescopic leg according to Claim 4, **characterized in that** the resilient bearing member (11) comprises a cup (20) which is connected to the piston rod (17) and is supported with the interposition of the resilient insert members (21) in a sleeve-shaped receiving means (22) held on the dome (10) of the body (4) and which engages over the dome (10).

## Revendications

1. Jambe de suspension (1) pour un véhicule automobile avec un appui séparé sur le châssis du véhicule, pour un ressort hélicoïdal (3) et un amortisseur de chocs (2), le ressort hélicoïdal (3) étant soutenu sur un plateau à ressort (6) maintenu côté châssis et l'amortisseur de chocs (2) étant soutenu dans un élément-support (5, 11) situé côté châssis et présentant une élasticité, le plateau à ressort (6) étant relié à un élément de butée (8) par l'intermédiaire d'un organe de découplage (12) élastique, le plateau à ressort (6), l'élément de butée (7) et l'élément de découplage élastique constituant un ensemble de construction (7) qui peut être fixé de façon interchangeable à l'élément-support (5; 11) sur un mandrin (10) du châssis du véhicule (4) par l'intermédiaire de vis (9), au-dessus et au-dessous de l'élément de butée (8) étant disposées des butées de limitation de déploiement et d'écrasement élastiques (13, 14), disposées à distance entre deux disques (15 et 16) reliés à une tige de piston (17) de l'amortisseur de chocs (2), le disque supérieur (15) étant relié à l'élément-support (5; 11), caractérisée en ce que l'élément de butée (8) est fixé sur le châssis du véhicule (10, 4), le plateau à ressort (6) étant relié d'un seul tenant à l'élément de butée (8) avec interposition de l'organe de découplage élastique (12).

2. Jambe de suspension selon la revendication 1, caractérisée en ce que le plateau à ressort (6) est réalisé pour loger avec effet d'appui un autre plateau à ressort (6a) destiné à un ressort hélicoïdal (3a) de plus grand diamètre (D) et est constitué d'un élément en forme de douille qui est de son côté adapté la forme du premier plateau à ressort (6) et qui présente de l'autre côté un logement annulaire (19a) à section angulaire pour le ressort hélicoïdal (3a).

3. Jambe de suspension selon la revendication 1 ou 2, caractérisée en ce que l'élément-support (5) élastique est constitué d'un ensemble hydraulique pouvant être relié par les vis de fixation (9) à l'ensemble de construction (7) sur le mandrin (10) du châssis du véhicule (4).

4. Jambe de suspension selon les revendications 1 à 3, caractérisée en ce que l'élément-support (11) élastique est constitué d'un élément de garniture (21) présentant une élasticité radiale.

5. Jambe de suspension selon la revendication 4, caractérisée en ce que l'élément-support élastique (11) comprend un pot (20) relié à la tige de piston (17) et soutenu, avec interposition des éléments de garniture élastiques (21), dans un logement (22) en forme de douille, maintenu sur le mandrin (10) du châssis (4) et enchâssant le mandrin (10)
